(19) Europäisches Patentamt / European Patent Office / Office européen des brevets

(11) **EP 3 671 554 B1**

(12) **EUROPEAN PATENT SPECIFICATION**

(45) Date of publication and mention of the grant of the patent:
**01.07.2026 Bulletin 2026/27**

(21) Application number: **18214254.7**

(22) Date of filing: **19.12.2018**

(51) International Patent Classification (IPC):
**G06V 10/24** (2022.01)    **G06V 20/20** (2022.01)

(52) Cooperative Patent Classification (CPC):
**G06V 20/20; G06V 10/24**

(54) **GEOMETRIC BEAM AUTO-CALIBRATION OR AUTOMATION OF GEOMETRIC CALIBRATION OF DIGITAL LIGHTING BEAMS**

GEOMETRISCHE AUTOMATISCHE STRAHLKALIBRIERUNG ODER AUTOMATISIERUNG DER GEOMETRISCHEN KALIBRIERUNG VON DIGITALEN LICHTSTRAHLEN

ÉTALONNAGE AUTOMATIQUE DE FAISCEAU GÉOMÉTRIQUE OU AUTOMATISATION D'ÉTALONNAGE GÉOMÉTRIQUE DE FAISCEAUX D'ÉCLAIRAGE NUMÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020 Bulletin 2020/26**

(73) Proprietor: **Valeo Vision**
**93012 Bobigny Cedex (FR)**

(72) Inventor: **ALMEHIO, Yasser**
**93012 BOBIGNY Cedex (FR)**

(74) Representative: **Valeo Visibility**
**Service Propriété Industrielle**
**c/o Valeo Vision**
**34, rue Saint André**
**93012 Bobigny (FR)**

(56) References cited:
**FR-A1- 3 051 413    US-A1- 2018 274 743**

- **HANHOON PARK ET AL: "Surface-Independent Direct-Projected Augmented Reality", 1 January 2005, COMPUTER VISION - ACCV 2006 LECTURE NOTES IN COMPUTER SCIENCE;;LNCS, SPRINGER, BERLIN, DE, PAGE(S) 892 - 901, ISBN: 978-3-540-31244-4, XP019027517**

- **ZHENGYOU ZHANG: "Flexible camera calibration by viewing a plane from unknown orientations", COMPUTER VISION, 1999. THE PROCEEDINGS OF THE SEVENTH IEEE INTERNATION AL CONFERENCE ON KERKYRA, GREECE 20-27 SEPT. 1999, LOS ALAMITOS, CA, USA,IEEE COMPUT. SOC, US, vol. 1, 20 September 1999 (1999-09-20), pages 666 - 673, XP010350391, ISBN: 978-0-7695-0164-2**

- **OLIVER BIMBER ET AL: "Spatial Augmented Reality", 8 August 2005 (2005-08-08), Hoboken, XP055288526, ISBN: 978-1-56881-521-3, Retrieved from the Internet <URL:http://web. media.mit.edu/~raskar/SAR.pdf> [retrieved on 20190625]**

- **ANONYMOUS: "Affine transformation - Wikipedia", 17 September 2018 (2018-09-17), XP055599722, Retrieved from the Internet <URL:https://en.wikipedia.org/w/index.php? title=Affine_transformation&oldid=859998669> [retrieved on 20190626]**

- **GARRIDO-JURADO, S.; MUNOZ-SALINAS, R.; MADRID-CUEVAS, F. J.; MARIN-JIMENEZ, M. J.: "Automatic generation and detection of highly reliable fiducial markers under occlusion", PATTERN RECOGNITION, vol. 47, no. 6, 2014, pages 2280 - 2292, XP002792412**

EP 3 671 554 B1

## Description

### TECHNICAL FIELD

This invention is related to the field of automotive lighting devices, and more particularly, to the management of lighting devices which are configured to project figures on the road.

### STATE OF THE ART

Current lighting devices are capable of projecting not only a light beam pattern, but also specific geometric figures. This ability may be used in providing augmented reality while driving or just as an aesthetic functionality, but the fact is that they need calibration.

Two sides' beams co-work to produce a correct projection of a structured light image (pictogram, lines, hazard marking...). It's not enough that two beams are mechanically collinear with regards to their positions, but they must be calibrated to produce a well-defined image.

Manual calibration, using metric information on ground or on a wall and trying to tune each parameter may be a complicated task, due to the high number of calibration parameters involved. At the end, it is a matter of trial and error, and the final calibration may be far from perfect. Since there are two headlamps in each vehicle, small errors in calibration may involve the projection of a wrong picture. An example of relevant prior art is FR 3 051 413 A1 (VALEO VISION [FR]) 24 November 2017 (2017-11-24) that deals with the calibration problem by using a standard beam and modifying the intensity and colour of the beam by driving the LEDs and its intensity.

A solution for this problem is sought.

### SUMMARY OF THE INVENTION

The invention provides an alternative solution for calibrating an automotive lighting device by a method for correcting a light pattern according to claim 1 and an automotive lighting assembly according to claim 5.

Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides a method for calibrating a lighting module of an automotive lighting device, the method comprising the steps of

the lighting module projects a light pattern;
image capturing means acquires the projected light pattern;
a control centre compares the projected light pattern with an ideal light pattern;
the control centre identifies parameters of scaling, tilting, shearing and/or displacement of the projected light pattern with respect to the ideal light pattern;
the control centre corrects the operation of the lighting module with the values of scaling, tilting, shearing and/or displacement.

This method allows a calibration of a lighting module, focusing on a geometric transformation of the projected image with respect to an ideal image. This geometric transformation will be used to correct the whole operation of the lighting module, in order to obtain a calibrated image.

In some particular embodiments of this method, the step of projecting a light pattern is made against a vertical surface, which is perpendicular to a projecting direction of the light pattern.

The light pattern is projected according to a projecting direction, which is normally a direction forward from the vehicle where the lighting module is installed. A vertical plane, which is perpendicular to this direction, ensures a good reception of this image, so that it is calibrated in a more reliable way.

In the invention the step of identifying parameters of scaling, tilting, shearing and/or displacement is carried out by comparing the coordinates of three different points of the projected light pattern with the coordinates of three different points of the ideal light pattern and transform the comparison in values of scaling, tilting, shearing and/or displacement.

This is an easy way of obtaining a relation between the projected image and the ideal image, so that this relation may be applied to the whole light source arrangement of the lighting module.

In some particular embodiments of this method, a transformation matrix is used to calculate the values of scaling, tilting, shearing and/or displacement.

A transformation matrix is a useful tool to obtain this relation between the projected image and the ideal image.

In some particular embodiments of this method, a least-mean square method is used to solve the problem of calculating the matrix values.

This numeric method is also a useful tool to obtain the values of the transformation matrix.

In the invention the step of projecting a light pattern includes projecting squared fiducial markers.

Squared fiducial markers are a useful tool to identify the shape of the projected light pattern. Some of them are really advantageous for this use, like the one described in Garrido-Jurado, S., Muñoz-Salinas, R., Madrid-Cuevas, F. J., & Marín-Jiménez, M. J. (2014). Automatic generation and detection of highly reliable fiducial markers under occlusion. Pattern Recognition, 47(6), 2280-2292. These are easy to be generated and easy to be recognized. Further, once that the shape has been recognized, it is easy to find the four corners that will allow the control centre to solve the problem of matrix.

In a second inventive aspect, the invention provides an automotive lighting device comprising

an automotive lighting device comprising a lighting module which comprises a matrix arrangement of solid-state light sources, intended to provide a light pattern;
an image acquisition element and a control centre for accomplishing the steps of the method according to any of the preceding claims.

The term "solid state" refers to light emitted by solid-state electroluminescence, which uses semiconductors to convert electricity into light. Compared to incandescent lighting, solid state lighting creates visible light with reduced heat generation and less energy dissipation. The typically small mass of a solid-state electronic lighting device provides for greater resistance to shock and vibration compared to brittle glass tubes/bulbs and long, thin filament wires. They also eliminate filament evaporation, potentially increasing the life span of the illumination device. Some examples of these types of lighting comprise semiconductor light-emitting diodes (LEDs), organic light-emitting diodes (OLED), or polymer light-emitting diodes (PLED) as sources of illumination rather than electrical filaments, plasma or gas.

This lighting device provides a matrix arrangement with means of calibration, so that the position of the lighting modules which are intended to project the image pattern may be calibrated automatically, either when the vehicle has just left the assembly line or when a lighting device has been replaced.

In some particular embodiments, the image acquisition element is comprised in the automotive lighting device.

Manufacturing an automotive lighting device with a dedicated camera allows an autocalibration of the system which may be integrated in the control centre of the vehicle.

In some particular embodiments, the image acquisition element is external to the automotive lighting device.

However, this method may also be carried out using an external camera, which may capture the projected pattern to compare it with an internally stored ideal image.

In some particular embodiments, the matrix arrangement comprises at least 2000 solid-state light sources.

This invention can be useful for many types of lighting matrix/array-based technology, from the simplest one, with only a few thousands light sources, to more advanced one, with several hundred thousand one.

## BRIEF LIST OF DRAWINGS AND REFERENCE NUMBERS

[0031] To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:

Figure 1 shows some steps of a method for calibrating a lighting module of an automotive lighting device.

Figures 2a to 2f show examples of deformations of the projected light pattern with respect to the ideal light pattern and the associated values in the transformation matrix.

Elements of the example embodiments are consistently denoted by the same reference numerals throughout the drawings and detailed description where appropriate:

1 Lighting module
2 Projected light pattern
3 Projecting surface
4 Camera
5 Ideal light pattern
100 Automotive vehicle

## DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included.

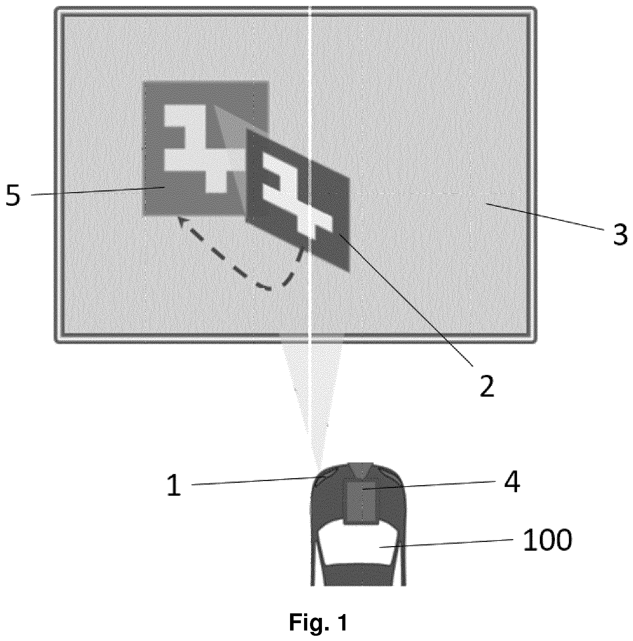

Figure 1 shows some steps of a method for calibrating a lighting module of an automotive lighting device.

In this figure, there is an automotive vehicle 100 which comprises a lighting module 1. This lighting module 1 projects a light pattern 2 over a projecting surface 3. This light pattern 2 is deformed, since the lighting module 1 is not calibrated. A camera 4, which is installed in the automotive vehicle 100, captures this projected light pattern 2, and compares it with an ideal light pattern 5, which is not projected, but is stored in the control centre of the automotive vehicle 100, and is shown in the figure for the convenience of the reader, for a better understanding of the invention. Although in this case the camera is comprised in the automotive vehicle, in other embodiments it may be located outside the vehicle, for example, in a mobile device.

The ideal light pattern 5 is a square fiducial marker which is easy to identify.

The control centre compares the projected light pattern 2 with the ideal light pattern 5. As may be seen in this figure, the projected light pattern 2 is displaced with respect to the ideal light pattern 5, and it is also deformed.

The control centre identifies some parameters of scaling in x and y axes, tilting (or shearing) in x and y axes and displacement in x and y axes of the projected light pattern 2 with respect to the ideal light pattern 5.

Once the spatial relation between the projected light pattern 2 and the ideal light pattern 5 is shown, the control centre will correct the light projection of the lighting module 1 so that this lighting module 1 emits a calibrated image pattern.

The lighting module 1 has a matrix arrangement of light sources, having a resolution greater than 2000 pixels. However, no restriction is attached to the technology used for producing the projection modules.

A first example of this matrix configuration comprises a monolithic source. This monolithic source comprises a matrix of monolithic electroluminescent elements arranged in several columns by several rows. In a monolithic matrix, the electroluminescent elements can be grown from a common substrate and are electrically connected to be selectively activatable either individually or by a subset of electroluminescent elements. The substrate may be predominantly made of a semiconductor material. The substrate may comprise one or more other materials, for example non-semiconductors (metals and insulators). Thus, each electroluminescent element/group can form a light pixel and can therefore emit light when its/their material is supplied with electricity. The configuration of such a monolithic matrix allows the arrangement of selectively activatable pixels very close to each other, compared to conventional light-emitting diodes intended to be soldered to printed circuit boards. The monolithic matrix may comprise electroluminescent elements whose main dimension of height, measured perpendicularly to the common substrate, is substantially equal to one micrometre.

The monolithic matrix is coupled to the control centre so as to control the generation and/or the projection of a pixilated light beam by the matrix arrangement. The control centre is thus able to individually control the light emission of each pixel of the matrix arrangement.

Alternatively to what has been presented above, the matrix arrangement 6 may comprise a main light source coupled to a matrix of mirrors. Thus, the pixelated light source is formed by the assembly of at least one main light source formed of at least one light emitting diode emitting light and an array of optoelectronic elements, for example a matrix of micro-mirrors, also known by the acronym DMD, for "Digital Micro-mirror Device", which directs the light rays from the main light source by reflection to a projection optical element. Where appropriate, an auxiliary optical element can collect the rays of at least one light source to focus and direct them to the surface of the micro-mirror array.

Each micro-mirror can pivot between two fixed positions, a first position in which the light rays are reflected towards the projection optical element, and a second position in which the light rays are reflected in a different direction from the projection optical element. The two fixed positions are oriented in the same manner for all the micro-mirrors and form, with respect to a reference plane supporting the matrix of micro-mirrors, a characteristic angle of the matrix of micro-mirrors defined in its specifications. Such an angle is generally less than 20° and may be usually about 12°. Thus, each micro-mirror reflecting a part of the light beams which are incident on the matrix of micro-mirrors forms an elementary emitter of the pixelated light source. The actuation and control of the change of position of the mirrors for selectively activating this elementary emitter to emit or not an elementary light beam is controlled by the control centre.

In different embodiments, the matrix arrangement may comprise a scanning laser system wherein a laser light source emits a laser beam towards a scanning element which is configured to explore the surface of a wavelength converter with the laser beam. An image of this surface is captured by the projection optical element.

The exploration of the scanning element may be performed at a speed sufficiently high so that the human eye does not perceive any displacement in the projected image.

The synchronized control of the ignition of the laser source and the scanning movement of the beam makes it possible to generate a matrix of elementary emitters that can be activated selectively at the surface of the wavelength converter element. The scanning means may be a mobile micro-mirror for scanning the surface of the wavelength converter element by reflection of the laser beam. The micro-mirrors mentioned as scanning means are for example MEMS type, for "Micro-Electro-Mechanical Systems". However, the invention is not limited to such a scanning means and can use other kinds of scanning means, such as a series of mirrors arranged on a rotating element, the rotation of the element causing a scanning of the transmission surface by the laser beam.

In another variant, the light source may be complex and include both at least one segment of light elements, such as light emitting diodes, and a surface portion of a monolithic light source.

Regarding the identification steps, the control centre uses the position of three characterizing points of the projected light pattern 2 and compare it with the position of the same three points in the ideal image 5.

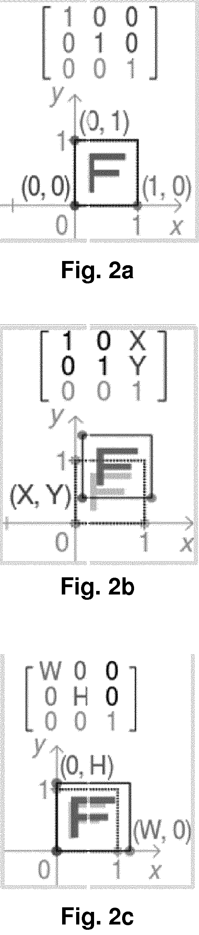

Figures 2a to 2f show examples of deformations of the projected light pattern with respect to the ideal light pattern and the associated values in the transformation matrix.

Figure 2a shows an identification: the projected light pattern is the same as the ideal light pattern, so the transformation matrix is the identity matrix.

Figure 2b shows a mere translation. The three points are translated the same distance from the original ones, so the transformation matrix includes the translation coordinates in the third column.

Figure 2c shows a scale transformation. The projected light pattern is bigger than the ideal one, so the transformation matrix reveals the scale factors in the diagonal positions.

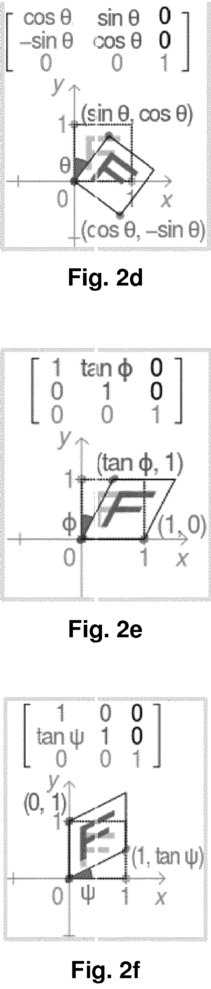

Figure 2d shows a rotation transformation. The projected light pattern has been rotated an angle θ with respect to the ideal one, and this is reflected in the transformation matrix.

Figures 2e and 2f show shear transformations. Figure 2e show a shear transformation according to the x axis and figure 2f show a shear transformation according to the y axis.

The transformation matrix reveals the effect of this transformation in the coordinates of the reference points.

The control centre chooses three reference points in the ideal light pattern and, by known algorithms, identifies the position of these three points in the real projected light pattern. Then, a system of equations is set using the transformation matrix:

$$\begin{pmatrix} x' \\ y' \\ z' \end{pmatrix} = \begin{bmatrix} a & b & c \\ d & e & f \\ 0 & 0 & 1 \end{bmatrix} \begin{pmatrix} x \\ y \\ z \end{pmatrix}$$

Where x', y' and z' are the coordinates of the points of the projected light pattern and x, y, z are the coordinates of the points of the ideal pattern.

The system of equations allows the obtention of the parameters a, b, c, d, e, f, which allow the control centre to correct the emission of the light patterns from the lighting module, so as to obtain a calibrated light pattern.

## Claims

1. Method for calibrating a lighting module (1) of an automotive lighting device, the method comprising the steps of

   the lighting module (1) projects a light pattern (2), the projected light pattern comprising ar image;

   image capturing element (4) acquires the projected light pattern (2), the projected light pattern including squared fiducial markers;

   a control centre compares the projected light pattern (2) with an ideal light pattern (5);

   the control centre identifies parameters of scaling, tilting, shearing and/or displacement of the projected light pattern (2) with respect to the ideal light pattern (5);

   the control centre corrects the operation of the lighting module (1) with the values of scaling, tilting, shearing and/or displacement,

   wherein the step of identifying parameters of scaling, tilting, shearing and/or displacement is carried out by comparing the coordinates of three different points of the projected light pattern (2) with the coordinates of three different points of the ideal light pattern (5) and transform the comparison in values of scaling, tilting, shearing and/or displacement.

2. Method according to claim 1, wherein the step of projecting a light pattern is made against a vertical surface, which is perpendicular to a projecting direction of the light pattern.

3. Method according to any of the preceding claims, wherein a transformation matrix is used to calculate the values of scaling, tilting, shearing and/or displacement.

4. Method according to claim 3, wherein a least-mean square method is used to solve the problem of calculating the matrix values.

5. Automotive lighting assembly comprising

   an automotive lighting device comprising a lighting module (1) which comprises a matrix arrangement of solid-state light sources, intended to provide a light pattern (2);

   an image acquisition element (4) and a control centre for accomplishing the steps of the method according to any of the preceding claims.

6. Automotive lighting assembly according to claim 5, wherein the image acquisition element (4) is comprised in the automotive lighting device.

7. Automotive lighting assembly according to claim 5, wherein the image acquisition element (4) is external to the automotive lighting device.

8. Automotive lighting assembly according to any of claims 5 to 7, wherein the matrix arrangement comprises at least 2000 solid-state light sources.

## Patentansprüche

1. Verfahren zur Kalibrierung eines Beleuchtungsmoduls (1) einer Kraftfahrzeugbeleuchtungsvorrichtung, wobei das Verfahren die folgenden Schritte umfasst:

    das Beleuchtungsmodul (1) projiziert ein Lichtmuster (2);
    ein Bilderfassungselement (4) erfasst das projizierte Lichtmuster (2);
    eine Steuerzentrale vergleicht das projizierte Lichtmuster (2) mit einem idealen Lichtmuster (5);
    die Steuerzentrale identifiziert Parameter der Skalierung, Neigung, Scherung und/oder Verschiebung des projizierten Lichtmusters (2) in Bezug auf das ideale Lichtmuster (5);
    die Steuerzentrale korrigiert den Betrieb des Beleuchtungsmoduls (1) mit den Werten der Skalierung, Neigung, Scherung und/oder Verschiebung.

2. Verfahren nach Anspruch 1, wobei der Schritt des Projizierens eines Lichtmusters gegen eine vertikale Oberfläche erfolgt, die senkrecht zu einer Projektionsrichtung des Lichtmusters steht.

3. Verfahren nach einem der vorhergehenden Ansprüche, wobei der Schritt des Identifizierens von Parametern der Skalierung, Neigung, Scherung und/oder Verschiebung durch Vergleichen der Koordinaten von drei verschiedenen Punkten des projizierten Lichtmusters (2) mit den Koordinaten von drei verschiedenen Punkten des idealen Lichtmusters (5) und Umwandlung des Vergleichs in Werte der Skalierung, Neigung, Scherung und/oder Verschiebung durchgeführt wird.

4. Verfahren nach Anspruch 3, wobei eine Transformationsmatrix verwendet wird, um die Werte der Skalierung, Neigung, Scherung und/oder Verschiebung zu berechnen.

5. Verfahren nach Anspruch 4, wobei eine Methode der kleinsten Quadrate verwendet wird, um das Problem der Berechnung der Matrixwerte zu lösen.

6. Verfahren nach einem der vorhergehenden Ansprüche, wobei der Schritt des Projizierens eines Lichtmusters das Projizieren quadratischer Referenzmarker umfasst.

7. Kraftfahrzeugbeleuchtungsanordnung, umfassend

eine Kraftfahrzeugbeleuchtungsvorrichtung mit einem Beleuchtungsmodul (1), das eine Matrixanordnung von Festkörperlichtquellen umfasst, die dazu bestimmt ist, ein Lichtmuster (2) bereitzustellen;
ein Bilderfassungselement (4) und eine Steuerzentrale zur Durchführung der Schritte des Verfahrens nach einem der vorhergehenden Ansprüche.

8. Kraftfahrzeugbeleuchtungsanordnung nach Anspruch 7, wobei das Bilderfassungselement (4) in der Kraftfahrzeugbeleuchtungsvorrichtung enthalten ist.

9. Kraftfahrzeugbeleuchtungsanordnung nach Anspruch 7, wobei das Bilderfassungselement (4) außerhalb der Kraftfahrzeugbeleuchtungsvorrichtung liegt.

10. Kraftfahrzeugbeleuchtungsanordnung nach einem der Ansprüche 7 bis 9, wobei die Matrixanordnung mindestens 2000 Festkörperlichtquellen umfasst.

## Revendications

1. Méthode pour calibrer un module d'éclairage (1) d'un dispositif d'éclairage automobile, la méthode comprenant les étapes de

    le module d'éclairage (1) projette un motif lumineux (2);
    un élément de capture d'image (4) acquiert le motif lumineux projeté (2);
    un centre de contrôle compare le motif lumineux projeté (2) avec un motif lumineux idéal (5);
    le centre de contrôle identifie les paramètres de mise à l'échelle, d'inclinaison, de cisaillement et/ou de déplacement du motif lumineux projeté (2) par rapport au motif lumineux idéal (5);
    le centre de contrôle corrige le fonctionnement du module d'éclairage (1) avec les valeurs de mise à l'échelle, d'inclinaison, de cisaillement et/ou de déplacement.

2. Méthode selon la revendication 1, dans laquelle l'étape de projection d'un motif lumineux est effectuée contre une surface verticale, qui est perpendiculaire à une direction de projection du motif lumineux.

3. Méthode selon l'une quelconque des revendications précédentes, dans laquelle l'étape d'identification des paramètres de mise à l'échelle, d'inclinaison, de cisaillement et/ou de déplacement est réalisée en comparant les coordonnées de trois points différents du motif lumineux projeté (2) avec les coordonnées de trois points différents du motif lumineux idéal (5) et en transformant la comparaison en valeurs de mise à l'échelle, d'inclinaison, de cisaillement et/ou de déplacement.

4. Méthode selon la revendication 3, dans laquelle une matrice de transformation est utilisée pour calculer les valeurs de mise à l'échelle, d'inclinaison, de cisaillement et/ou de déplacement.

5. Méthode selon la revendication 4, dans laquelle une méthode des moindres carrés est utilisée pour résoudre le problème du calcul des valeurs de la matrice.

6. Méthode selon l'une quelconque des revendications précédentes, dans laquelle l'étape de projection d'un motif lumineux comprend la projection de marqueurs fiduciaires carrés.

7. Ensemble d'éclairage automobile comprenant

un dispositif d'éclairage automobile comprenant un module d'éclairage (1) qui comprend un arrangement matriciel de sources lumineuses à semi-conducteurs, destiné à fournir un motif lumineux (2);
un élément d'acquisition d'image (4) et un centre de contrôle pour accomplir les étapes de la méthode selon l'une quelconque des revendications précédentes.

8. Ensemble d'éclairage automobile selon la revendication 7, dans lequel l'élément d'acquisition d'image (4) est compris dans le dispositif d'éclairage automobile.

9. Ensemble d'éclairage automobile selon la revendication 7, dans lequel l'élément d'acquisition d'image (4) est externe au dispositif d'éclairage automobile.

10. Ensemble d'éclairage automobile selon l'une quelconque des revendications 7 à 9, dans lequel l'arrangement matriciel comprend au moins 2000 sources lumineuses à semi-conducteurs.

**Fig. 1**

Fig. 2a

Fig. 2b

Fig. 2c

$$\begin{bmatrix} \cos\theta & \sin\theta & 0 \\ -\sin\theta & \cos\theta & 0 \\ 0 & 0 & 1 \end{bmatrix}$$

**Fig. 2d**

$$\begin{bmatrix} 1 & \tan\phi & 0 \\ 0 & 1 & 0 \\ 0 & 0 & 1 \end{bmatrix}$$

**Fig. 2e**

$$\begin{bmatrix} 1 & 0 & 0 \\ \tan\psi & 1 & 0 \\ 0 & 0 & 1 \end{bmatrix}$$

**Fig. 2f**

## REFERENCES CITED IN THE DESCRIPTION

**Patent documents cited in the description**

- FR 3051413 A1, VALEO VISION [FR]

- FR 20171124 A1

**Non-patent literature cited in the description**

- **GARRIDO-JURADO, S** ; **MUÑOZ-SALINAS, R** ; **MADRID-CUEVAS, F. J** ; **MARÍN-JIMÉNEZ, M. J**. Automatic generation and detection of highly reliable fiducial markers under occlusion. *Pattern Recognition*, 2014, vol. 47 (6), 2280-2292